# EUROPEAN PATENT APPLICATION

(11) **EP 0 755 714 A2**
(43) Date of publication of application: **29.01.1997**
(21) Application number: 96201688.7
(22) Date of filing: 17.06.1996
(51) Int. Cl.: B01D 53/75, F01N 3/20

(54) **Wide range hydrocarbon adsorber and quick lightoff catalyst**

(30) Priority: 27.07.1995 US 508147
(71) Applicant: GENERAL MOTORS CORPORATION, Detroit Michigan 48202 (US)
(72) Inventor: Weible, Glen Paul, Wichita Falls, Texas 76310 (US); Beckmeyer, Richard Frederick, Clarkston, Michigan 48346 (US); Singer, David Allen, Farmington, Michigan 48335 (US); Shunkwiler, Jeffrey Alan, Grand Blanc, Michigan 48439 (US); Pamphilis, Nicholas Alexander, Clarkstone, Michigan 48348 (US)
(74) Representative: Denton, Michael John

(57) **Abstract**

A combined adsorber and quick lightoff catalyst are provided comprising a base formed of zeolite and other oxide materials ion-exchanged with a precious metal such as palladium. The matrix oxide materials are chosen in combination with specific precious metals to act additionally as a low temperature catalyst to further enhance the efficiency in the removal of all three components, hydrocarbons, carbon monoxide, and oxides of nitrogen.

## Description

### Technical Field

The present invention relates to adsorber Systems for use with catalytic converters, and more particularly relates to a composition and structure which provides excellent adsorption of certain components of engine exhaust, and which additionally provide quick lightoff.

### Description of Related Art

Typically, materials proposed for adsorber systems are from the families of either zeolite molecular sieves or activated carbons. The mode of Operation is to have the materials present in the exhaust feedstream when a car is first started and the underfloor catalyst is not yet active. They then adsorb hydrocarbons until the temperature begins to cause desorption. At this time, the exhaust is valved to go through the catalyst. Once the catalyst is efficient, the adsorber is then purged of hydrocarbons which then go to the intake of the engine or through the catalyst.

The problem that arises with prior art systems is that the desorption temperature of any of these prior art adsorber materials is lower than the temperature at which the catalysts which are utilized are active. Therefore valving and sequential purging at a later time are necessary. Valving is also necessary to protect these materials from thermal damage during high exhaust temperature conditions. Additionally, the prior art adsorber compositions are active only with respect to some but not all hydrocarbons, and have no advantageous effect on CO or NOx. Additionally, purging is difficult and some hydrocarbons tend to build up over time and cannot be removed. This condition is sometimes termed a "heel".

Lightoff catalysts in the prior art have the deficiency of not becoming active until 10 seconds or so into the run. Further, these prior art lightoff catalysts also have durability problems because they are typically mounted near the exhaust manifold and are in the exhaust stream, which is not valved, during high exhaust temperature operation. Lightoff is the time it takes for the converter to remove from the exhaust stream 50% of the specific constituent being monitored once the engine (or test) is started.

### SUMMARY OF THE INVENTION

In accordance with the present invention, a combined adsorber and quick lightoff system is provided comprising zeolites and oxides in combination with ion-exchanged precious or noble metals. This combination offers a unique and very interesting composition. It combines an adsorber material with a very low temperature lightoff catalyst in intimate contact with the adsorbed species, allowing for oxidation to occur in conjunction with desorption. Therefore, a desorption cycle is not required and heeling is not a problem, since the material is self-cleaning. Also, with the precious metal present, there is a potential for a boost in CO and NOx removal performance together with improvements in the removal of hydrocarbons. Much simplicity and flexibility are thus added to the system. The adsorber/catalyst can be positioned close to the engine, with a simple valve utilized which switches over to the underfloor catalyst at some predetermined time to reduce system back pressure and excessive thermal aging. Alternatively, the adsorber/catalyst can be unvalved and sandwiched between some catalyst volumes, or even unvalved and positioned at the far end of the system. The zeolite is best utilized with other oxide materials such as alumina, titania, or zirconia, to improve adherence to a support, e.g. a cordierite honeycomb. The matrix oxide materials are chosen in combination with specific precious metals, additionally to serve as a low temperature catalyst providing enhanced conversion efficiency of all three components (HC,CO,NOx).

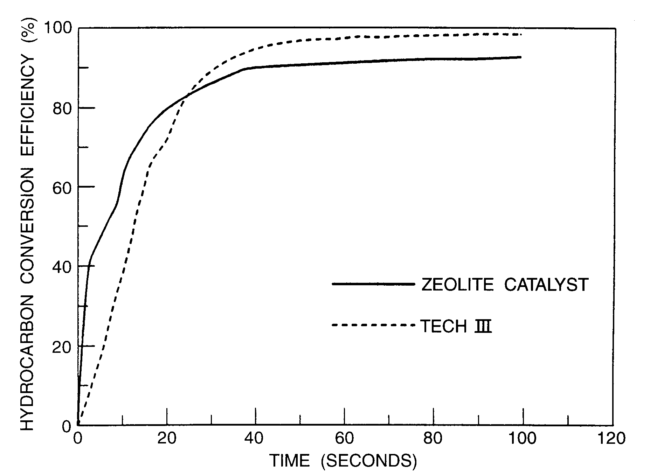

### Brief Description of the Drawing

The single drawing Figure is a graphical presentation comparing data obtained in tests of the present composition with data obtained from the tests of a commercial three-way catalyst.

### Detailed Description of the Preferred Embodiments

An adsorbing composition according to the invention was prepared as follows:
Example 1. A solution of Pd(NH₃)₄(N0₃)₂ was prepared to provide 0.0166 grams of Pd/gram of washcoat. Under shear, 40% of the solids, by weight, were added as stabilized Y-type zeolite to the palladium solution. The slurry was sheared for one hour to promote ion-exchange of the palladium into the zeolite. Boehmite alumina was added to make up the remainder of the slurry's solids content. The slurry was then applied to an 85 in³ 400 cells per square inch (cpsi) ceramic flow-through monolith via a washcoating process. After drying the washcoated monolith at 100°C, it was calcined in air for 2 hours at 600°C.

The completed monolith was set in a take-apart converter and a stoichiometric lightoff test performed. In the stoichiometric lightoff test the converter to be tested is valved from the exhaust stream (1.8L 4 cyl.) running at stoichiometric air/fuel ratio. (The engine is already warmed up). At time zero, the exhaust is valved through the converter and the time to reach 50% efficiency of HC, CO and NOx is measured and reported as "lightoff time" for each of the three constituents. Evaluation was preceded by a 10 minute stoichiometric stabilization preconditioning cycle.

Referring to the Figure, a graphical presentation is shown comparing the data obtained in the tests of the composition of the present invention (zeolite catalyst) with the data obtained from a test of a fresh standard AC Rochester Tech III gasoline catalyst (0.05 Pt/0.005 Rh weight percent). The graph shows the present invention provides significant improvement during the initial stages of testing, and that efficiencies never dropped off, thereby showing that conversion occurs either in conjunction with or before desorption. The measured data at 50% conversion efficiency measured in seconds is summarized in the following Table I:

**TABLE I**

| 50% Conversion Efficiency | | | |
|---|---|---|---|
| | HC | CO | NO% |
| Tech III (seconds) | 13.1 | 9.0 | 12.9 |
| Temperature(°C) | 339 | 283 | 337 |
| Zeolite* | 7.1 | 13.0 | 13.3 |
| Catalyst Of Invention (seconds) | | | |

| | | | |
|---|---|---|---|
| * Average of three consecutive test runs. | | | |

As shown in Table I, the 50% conversion efficiency in seconds for the catalyst of the invention is much better with respect to hydrocarbon conversion than the commercial Tech III converter.

It is obviously the goal of the adsorber material to be capable of adsorbing the wide range of hydrocarbons present during engine startup. Table II below shows the amounts of some of the most harmful HC species present in startup of a 3800 engine (3.8L fuel injected 6 cylinder), and the reactivity factors are applied resulting in a column containing the ozone forming potential (OFP) attributable to each individual specie. It should be noted on the chart that the "heavy hitters" are toluene, ethene, m&p xylene, and propene. It is to the adsorption of these hydrocarbons that the present invention is primarily directed, in order to develop a superior adsorber material.

**TABLE II**

| HC Compound | Phase g/mi) | Reactivity Factor | Ozone Forming Potential | Percent Ozone Forming Potential |
|---|---|---|---|---|
| Toluene | 0.0318 | 1.90 | 0.0604 | 17.16 |
| Ethene | 0.0100 | 5.30 | 0.0530 | 15.06 |
| m&p Xylene | 0.0077 | 6.00 | 0.0462 | 13.12 |
| Propene | 0.0047 | 6.60 | 0.0310 | 8.81 |

A thermogravimetric analysis (TGA) test was developed to characterize the ability of a material to adsorb and then desorb specific hydrocarbon species at elevated temperature. The activated carbon and zeolite materials referred to were all characterized and compared in these tests. In carrying out the tests, ethylene, propylene, butane, and toluene, at approximately 500 ppm levels (in the range of levels measured in actual exhaust) in dry nitrogen, were each passed across a sample of the test materials with the temperature and flow rate controlled and the weight uptake measured. Xylene was not tested due to its structural similarity to toluene and the fact that xylene has a higher boiling point than toluene and would condense more readily in the gas lines.

Table III below shows the ethylene adsorption and desorption characteristics of various carbon substrates:

**TABLE III**

| **Ethylene******* **Adsorption and Desorption Characteristics of Various Carbon Substrates** | | | |
|---|---|---|---|
| **Substrate** | **Adsorption Capacity** | **Desorption Efficiency** | |
| | **wt. gain (wt.%)** | | |
| | **at 50°C** | **at 150°C** | **at 250°C** |
| BAX950 | 0 | - | - |
| BX7530 | 0 | - | - |
| RO3515 | 0 | - | - |
| GBAC70R | 0 | - | - |
| MP | 0 | - | - |
| JFM3162A Monolith | 0 | - | - |

| | | | |
|---|---|---|---|
| *ca 500 PPM in Nitrogen | | | |

In the Tables, BAX950 and BX7530 are from Westvaco Corp., RO3515 from American Norit, GBAC70R and MP from Kureha, and JFM3162A from Corning Glassworks.

Table IV below shows the butane adsorption and desorption characteristics of various carbon substrates:

**TABLE IV**

| BUTANE* ADSORPTION AND DESORPTION CHARACTERISTICS OF VARIOUS CARBON SUBSTRATES | | | |
|---|---|---|---|
| **Substrate** | **Adsorption Capacity** | **Desorption Efficiency** | |
| | **wt. gain (wt.%)** | | |
| | **at 50°C** | **at 150°C** | **at 250°C** |
| BAX950 | 0.4 | 97.6 | 100.0 |
| BX7530 | 1.2 | 100.0 | 100.0 |
| RO3515 | 2.3 | 88.9 | 95.6 |
| GBAC70R | 1.8 | 89.7 | 96.2 |
| MP | 1.8 | 97.1 | 96.0 |
| JFM3162A Monolith | 0.7 | 100.0 | 100.0 |

| | | | |
|---|---|---|---|
| *ca 500 PPM in Nitrogen | | | |

Table V below shows the propylene adsorption and desorption characteristics of various carbon substrates:

**TABLE V**

| **Propylene******* **Adsorption and Desorption Characteristics of Various Carbon Substrates** | | | |
|---|---|---|---|
| **Substrate** | **Adsorption Capacity** | **Desorption Efficiency** | |
| | **wt. gain (wt. %)** | | |
| | **at 50°C** | **at 150°C** | **at 250°C** |
| BAX950 | 0.0 | - | - |
| BX7530 | 0.1 | 100.0 | 100.0 |
| RO3515 | 0.3 | 72.4 | 79.3 |
| GBAC70R | 0.2 | 61.9 | 61.9 |
| MP | 0.2 | 87.5 | 81.3 |
| JFM3162A Monolith | 0.0 | - | - |

| | | | |
|---|---|---|---|
| *ca 500 PPM in Nitrogen | | | |

Table VI below shows the adsorption and desorption of various hydrocarbon gases on ZSM-5 type zeolite substrates:

**Table VI**

| **ADSORPTION AND DESORPTION CHARACTERISTICS OF VARIOUS HYDROCARBON GASES OH ZSM-5 ZEOLITE SUBSTRATES AND ZSM-5 ZEOLITE SUBSTRATES CONTAINING 2 WT. % PALLADIUM** **ZSM-5 Zeolite** | | | | |
|---|---|---|---|---|
| **Hydrocarbon Gas** | **Adsorption Capacity (wt %)** | **Desorption Efficiency (% desorbed)** | | |
| | **50 C** | **150 C** | **250 C** | **450 C** |
| **ethylene**² | 0.0 | - | - | - |
| **propylene**¹ | 7.8 | 14.8 | 83.5 | 96.5 |
| **propylene**² | 8.8 | 0.3 | 77.8 | 94.0 |
| **butane**² | 0.7 | 84.3 | 90.0 | 95.7 |

| **ZSM-5 Zeolite containing 2 wt.% Pd** | | | | |
|---|---|---|---|---|
| **ethylene**² | 5.5 | 20.5 | 80.7 | 91.9 |
| **propylene**¹ | 6.8 | 12.3 | 89.4 | 96.5 |
| **propylene**² | 7.5 | 0.0 | 90.8 | 98.0 |
| **butane**² | 0.6 | 90.6 | 100.0 | 100.0 |

| | | | | |
|---|---|---|---|---|
| ¹ ca 500 ppm in nitrogen | | | | |
| ² ca 2500 ppm in nitrogen | | | | |

**Table VII**

| **ADSORPTION AND DESORPTION CHARACTERISTICS OF VARIOUS HYDROCARBON GASES ON Y-TYPE ZEOLITE SUBSTRATES CONTAINING 2 WT. % PALLADIUM** **Y-type Zeolite containing 2 wt.% Pd** | | | | |
|---|---|---|---|---|
| **Hydrocarbon Gas** | **Adsorption Capacity (wt %)** | **Desorption Efficiency (% desorbed)** | | |
| | **50 C** | **150 C** | **250 C** | **450 C** |
| **ethylene**² | 1.2 | 0.0 | 0.0 | 92.3 |
| **propylene**¹ | 5.9 | 42.1 | 54.0 | 92.1 |

| | | | | |
|---|---|---|---|---|
| ¹ ca 500 ppm in nitrogen | | | | |
| ² ca 2500 ppm in nitrogen | | | | |

Referring to Table V containing propylene (8.8% of OFP) data, the superiority of the zeolite over the carbon (8.5% vs. 0.3) becomes evident. Referring to Table III, containing ethylene (15.1% of OFP) data, the superiority of the ZSM-5 type zeolite material of the invention becomes eminently clear. ZSM-5 is a type of synthetic zeolite having an average 5 Angstrom pore openings in its structure. None of the other materials (including zeolite alone) have any adsorptive capacity for ethylene as compared to 5.5% for the Pd/zeolite. Toluene is generally easily adsorbed by any of the materials tested and therefore the comparison data obtained is not significant and is not presented here. The ethylene adsorption is clearly the most unexpected and important finding. Consequently, additional characterization was performed on this material. A Gas Chromatograph (GC) column was packed with the Pd/zeolite material of the invention and a 500 ppm ethylene in nitrogen gas was passed through the material. The loaded powder was then removed from the column and solid state magic angle NMR (nuclear magnetic resonance) was used to determine the structure of what was previously ethylene. Evidence was found which indicates the ethylene bonded chemically to the ionic sites of the Pd/zeolite.

The zeolite/Pd substrate according to the invention was prepared according to Example 1, described above. In carrying out the reaction, ZSM-5 zeolite (PQ Corp. CBU 3020) having a SiO₂/Al₂O₃ molar ratio of 10:1 - 35:1 was ion-exchanged with Pd(NH3)4(N03)2 to make the washcoat for a standard 400 CPSI cordierite monolith. However, a variety of zeolites are suitable such as at least one of X, Y and ZSM-5 type zeolites.

The adsorber of the present invention may be used in the same manner as other adsorber materials are used, for example, with valving and controlled purging, and exhibits better performance because of its superior adsorptive capacity together with desorptive efficiency on the high OFP species. Also, very good performance can be obtained by simply valving the present adsorber in order to protect it thermally and to reduce System back-pressure once desorption is complete. This is possible because of the additional low temperature catalytic properties of the Pd/zeolite, thereby eliminating the need for the complexity of a purge cycle. Slightly better results, however, will be obtained if purge is used for situations of marginal compliance.

The invention has been described in an illustrative manner, and it is to be understood that the terminology which has been used is intended to be in the nature of words of description rather than of limitation.

Obviously, many modifications and variations of the present invention are possible in light of the above teachings. It is, therefore, to be understood that, within the scope of the appended claims, the invention may be practiced otherwise than as specifically described.

## Claims

1. A combination adsorption and low temperature lightoff catalyst composition for the efficient removal of hydrocarbons, carbon monoxide, and oxides of nitrogen from engine exhaust gases, comprising:
an adsorbing material comprising zeolite in combination with an oxide selected from the group consisting of aluminum oxide, titanium oxide, zirconium dioxide, and mixtures thereof, the ratio by mole of said zeolite expressed in terms of SiO₂:Al₂O₃ being in the range of 10:1 to 35:1; and
a catalytically active component of at least one noble metal selected from the group consisting of palladium, platinum, rhodium, and iridium combined with said adsorbing material.

2. A composition according to claim 1, wherein said noble metal is palladium.

3. A composition according to claim 1, wherein said oxide is Al₂O₃.

4. A composition according to claim 1, wherein said noble metal is palladium and wherein said oxide is Al₂O₃.

5. A composition as according to claim 1 wherein said zeolite is at least one selected from the group consisting of X, Y and ZSM-5 type zeolites.

6. A combination adsorption and low temperature lightoff catalyst for the efficient removal of hydrocarbons, carbon monoxide, and oxides of nitrogen from engine exhaust gases, comprising:
an open cell monolithic or honeycombed inert carrier, permitting exhaust gases to flow freely therethrough;
an adsorbing material coated on the surfaces of said inert carrier comprising zeolite in combination with an oxide selected from the group consisting of aluminum oxide, titanium oxide, zirconium dioxide, and mixtures thereof, the ratio by mole of said zeolite expressed in terms of SiO₂:Al₂O₃ being in the range of 10:1 to 35:1; and
a catalytically active component of at least one noble metal selected from the group consisting of palladium, platinum, rhodium, and iridium combined with said adsorbing material.

7. A combination adsorption and low temperature lightoff catalyst according to claim 6, wherein said noble metal is palladium.

8. A combination adsorption and low temperature lightoff catalyst according to claim 6, wherein said oxide is Al₂O₃.

9. A combination adsorption and low temperature lightoff catalyst according to claim 6, wherein said noble metal is palladium and wherein said oxide is Al₂O₃.

10. A combination adsorption and low temperature lightoff catalyst according to claim 6, wherein said noble metal is introduced into said catalyst by preparing an aqueous solution of a salt of said metal;
mixing said zeolite and said oxide into said aqueous solution of dissolved metal salt under shear;
applying the slurry thus formed to a ceramic flow-through monolith;
drying the monolith; and
subsequently calcining the monolith in air at an elevated temperature.

11. A combination adsorption and low temperature lightoff catalyst according to claim 10, wherein said noble metal is palladium applied as an aqueous solution of Pd(NH₃)₄(NO₃)₂.

12. A combination adsorption and low temperature lightoff catalyst according to claim 10, wherein said oxide is Al₂O₃.

13. A combination adsorption and low temperature lightoff catalyst according to claim 10, wherein said noble metal is palladium applied as an aqueous solution of Pd(NH₃)₄(NO₃)₂ and wherein said oxide is Al₂O₃.

14. A method for preparing a combination adsorption and low temperature lightoff catalyst £or the efficient removal of hydrocarbons, carbon monoxide, and oxides of nitrogen from engine exhaust gases, comprising:
preparing an aqueous solution of a compound of at least one noble metal selected from the group consisting of palladium, platinum, rhodium, and iridium;
under shear adding 40% of solids by weight comprising zeolite and a metal oxide selected from the group consisting of alumina, titania, zirconia, and silica, the ratio by weight of the zeolite to the metal oxide being in the range of 1:1 - 20:1;
shearing the slurry for a time sufficient to promote ion-exchange deposition of said noble metal onto said zeolite and said metal oxide;
applying the slurry to a ceramic flow-through monolith by means of a washcoating process;
drying the coated monolith; and
calcining the coated monolith in air at an elevated temperature.

15. A method according to claim 14, wherein said noble metal is palladium.

16. A method according to claim 14, wherein said oxide is Al₂O₃.

17. A method according to claim 14, wherein said noble metal is palladium and wherein said oxide is Al₂O₃.
